# FASCICULE DE BREVET EUROPEEN

(11) **EP 3 045 321 B1**
(45) Date de publication et mention de la délivrance du brevet: **18.10.2017**
(21) Numéro de dépôt: 16157216.9
(22) Date de dépôt: 12.05.2014
(51) Int. Cl.: B42D 15/00, C09D 11/00, B42D 25/378, B42D 25/00, C09D 11/50, C09D 11/037

(54) **PROCÉDÉ DE FABRICATION D'UNE CARTE ET CARTE COMPRENANT AU MOINS UN MOTIF THERMOCHROMIQUE**
HERSTELLUNGSVERFAHREN EINER KARTE, UND KARTE, DIE MINDESTENS EIN THERMOCHROMES MOTIV UMFASST
METHOD FOR MANUFACTURING A CARD AND CARD COMPRISING AT LEAST ONE THERMOCHROMIC PATTERN

(30) Priorité: 13.05.2013 FR 1354254
(43) Date de publication de la demande: 20.07.2016
(62) Demande divisionnaire de: 14729414.4
(73) Titulaire: FASVER, 34670 Baillargues (FR)
(72) Inventeur: PHILIPPE, Eric, 13430 EYGUIERES (FR); BES, Laurence, 34830 JACOU (FR)
(74) Mandataire: Cabinet BARRE LAFORGUE & associés

(56) Documents cités:
- EP-A1- 0 400 220
- EP-A1- 0 678 377
- US-A- 4 028 118

## Description

L'invention concerne un procédé de fabrication d'une carte formée d'une pluralité de couches en au moins un matériau polymérique - notamment en polycarbonate- laminées à chaud et sous pression, et une telle carte.

EP 0400220 décrit un article laminé à des fins d'identification (tel qu'une carte d'identité) comprenant deux feuilles ou couches de PVC dont l'une au moins est transparente, entre lesquelles est laminée une couche contenant des cristaux liquides thermochromiques disposés sur un fond contrasté foncé. Ces cristaux liquides sont appliqués sous forme d'une encre à base aqueuse contenant un liant hydrosoluble polymérique, par exemple la gélatine ou un polyacrylamide. Comme l'indique ce document, la lamination à chaud et sous pression des feuilles de PVC portant les informations entraîne des problèmes d'adhérence. Ce document prévoit une étape de nettoyage précédant la lamination et visant à supprimer les composés chimiques supposés nuire à l'adhérence des différentes couches entre elles. Néanmoins, cet article n'a pas été exploité en pratique.

Diverses autres tentatives ont été faites d'incorporer des motifs thermochromiques dans des cartes formées d'une pluralité de couches thermoplastiques laminées à chaud et sous pression. Or, les compositions d'encre thermochromique connues et envisagées notamment dans ces applications sont des compositions à solvant aqueux. EP2322587 décrit un exemple de composition d'encre thermochromique comprenant des microcapsules incorporant une composition thermochromique et des absorbeurs UV dispersées dans un solvant aqueux avec un liant polymérique, par exemple acrylique.

Par ailleurs, de nombreuses cartes formant des supports de données et utilisées à des fins d'identification ou de sécurité (cartes bancaires, cartes d'identité, permis de conduire, cartes d'accès individuel à des sites ou des transports en commun, feuille de passeport...) sont formées par lamination à chaud et sous pression d'une pluralité de couches en matériau thermoplastique -notamment en polycarbonate, matériau présentant par ailleurs de nombreux avantages dans ces applications (rigidité, durabilité, facilité et fiabilité des marquages (inscriptions variables, motifs de sécurité...), possibilité d'effectuer des marquages par laser...)-. Or, les inventeurs ont constaté que les compositions d'encre thermochromique à solvant aqueux proposées jusqu'à maintenant ne sont pas compatibles avec les procédés de fabrication par lamination à chaud de telles couches de matériau thermoplastique, et en particulier avec la lamination à chaud (température de l'ordre de 150°C à 200°C) et sous pression (de l'ordre de 2.10⁴ Pa) de couches de polycarbonate. En effet, ces conditions de lamination détruisent l'effet thermochromique procuré par les compositions d'encre thermochromique imprimées sur les couches de polycarbonate. En outre, on constate irrémédiablement des problèmes d'adhérence des couches polycarbonate entre elles et avec les compositions thermochromiques imprimées. Également, les compositions d'encre thermochromique connues ont une durée de vie limitée au mieux à une ou deux années, ce qui est insuffisant dans les applications d'identification ou de sécurité pour lesquelles une durée de vie d'au moins 10 ans est requise (cf. notamment ISO 24789-1,2 (2012) - "Method of évaluation of identification (ID) card service life"). Le même problème se pose avec les papiers synthétiques et les papiers fiduciaires utilisés dans les applications de sécurité (authentification et/ou anti-falsification) et/ou d'identification qui sont souvent laminés à chaud et sous pression.

Il est à noter à ce titre que les compositions d'encres thermochromiques à durcissement sous irradiation par des ultraviolets ne sont pas non plus compatibles avec les procédés de lamination à chaud, l'activité thermochromique étant détruite sous l'action de la chaleur et/ou dans le temps, et procurent un effet thermochromique beaucoup moins réactif, insuffisant dans les applications susvisées dans lesquelles les composants thermochromique sont isolés thermiquement de l'extérieur par au moins une couche, notamment une couche de polycarbonate.

Par ailleurs le polycarbonate, les papiers synthétiques et les papiers fiduciaires sont sensibles à la plupart des solvants organiques et ne sont donc pas compatibles avec des impressions avec des encres à base de solvants organiques.

En conséquence, les propositions qui ont pu être faite d'incorporer des motifs thermochromiques dans les cartes laminées à chaud et sous pression -notamment en polycarbonate-, les papiers synthétiques et les papiers fiduciaires ne constituent à ce jour que des enseignements théoriques non réalisables en pratique à l'échelle industrielle ou commerciale, en particulier pour fabriquer des supports de données utilisables à des fins d'identification ou de sécurité.

L'invention vise donc à pallier ces inconvénients.

L'invention concerne un procédé de fabrication selon la revendication 1.

La composition d'encre thermochromique simultanément :
- est compatible avec une lamination à chaud à une température supérieure à 150°C, typiquement de l'ordre de 180°C,
- peut adhérer fortement sur une couche de matériau thermoplastique, notamment en polycarbonate, et/ou un papier synthétique et/ou sur un papier fiduciaire,
- ne nuit pas à l'adhésion des couches de matériau thermoplastique -notamment en polycarbonate- après leur lamination à chaud et sous pression,
- présente un effet thermochromique suffisamment réactif pour pouvoir être activable à travers l'épaisseur d'au moins une couche protectrice, notamment une couche en matériau thermoplastique -notamment en polycarbonate-, ou un film de sécurité ou une couche en papier synthétique ou en papier fiduciaire,
- présente un effet thermochromique persistant sur une durée supérieure à 10 ans,
- présente un effet thermochromique résistant à la lumière et aux variations et chocs de température et d'humidité.

La composition d'encre thermochromique comprend dans un milieu liquide, dit solvant, ledit solvant étant aprotique :
- une dispersion de microcapsules thermochromiques incorporant au moins un leuco-colorant, et
- un liant thermoplastique choisi dans le groupe formé des polyesters polyacryliques, des polyuréthanes, et de leurs copolymères.

Ledit solvant appartient donc au groupe des solvants aprotiques et est en particulier exempt d'eau et n'est pas un solvant aqueux. Il est à noter que le terme "solvant" est utilisé dans tout le texte pour désigner, à l'instar de la terminologie utilisée dans le domaine des compositions d'encre et de l'impression, le milieu liquide formant la base de la composition d'encre thermochromique, bien que ce milieu liquide ne constitue pas strictement un solvant au sens chimique du terme, les microcapsules thermochromique étant dispersées dans ce milieu liquide et non solubilisées dans ce dernier.

Les inventeurs ont constaté que l'utilisation d'un solvant aprotique dans la composition d'encre thermochromique permet d'obtenir des impressions thermochromiques qui sont ensuite compatibles avec une lamination à chaud et sous pression, qui présentent un effet thermochromique durable sur de nombreuses années et suffisamment réactif pour pouvoir est utilisé à travers au moins une épaisseur de matériau thermoplastique -notamment en polycarbonate-, qui présentent une excellente adhésion sur les matériaux thermoplastiques, plus particulièrement sur les matériaux thermoplastiques rigides à température ambiante -notamment sur le polycarbonate- et ne nuisent pas à l'adhérence de couches de tels matériaux plastiques -notamment en polycarbonate- lorsqu'elles sont interposées entre de telles couches. L'invention permet aussi d'obtenir des impressions thermochromiques qui sont ensuite compatibles avec les papiers synthétiques et les papiers fiduciaires. Aucune explication claire ne peut être donnée à ce phénomène surprenant constaté par les inventeurs. Il est cependant possible que le caractère aprotique du solvant, bien que ce dernier ne soit normalement plus présent lorsque que l'impression est durcie (le solvant ayant été évaporé), joue un rôle dans la résistance ultérieure des microcapsules thermochromiques à une lamination à chaud et sous pression et/ou dans le fonctionnement des leuco-colorants. Plus exactement, il est possible que le caractère protique des solvants aqueux utilisés jusqu'à maintenant dans les compositions d'encre thermochromique connues affecte considérablement la résistance ultérieure des microcapsules thermochromiques à une lamination à chaud et sous pression et/ou le fonctionnement des leuco-colorants.

Ledit solvant aprotique doit aussi être choisi pour être compatible avec les microcapsules et avec le liant, et pour être compatible avec la technique d'impression utilisée. Avantageusement et selon l'invention, le solvant aprotique est choisi dans le groupe des solvants des compositions imprimables par sérigraphie. Avantageusement et selon l'invention ledit solvant aprotique présente au moins l'une des caractéristiques suivantes :
- il est choisi dans le groupe des solvants aprotiques ayant un moment dipolaire compris entre 0 et 1,9 C.m,
- il est choisi dans le groupe des solvants aprotiques ayant une constante diélectrique (permittivité par rapport au vide) comprise entre 1,5 et 11,
- il est choisi dans le groupe des solvants polaires aprotiques,
- il comprend au moins un composé choisi dans le groupe formé des propanoates de n-alkyle et des propylènes de glycol (solvants particulièrement compatibles avec des microcapsules thermochromiques en mélamine formaldéhyde).

Plus particulièrement, dans un mode de réalisation avantageuse une composition d'encre thermochromique comprend à titre de solvant un composé choisi dans le groupe formé du propanoate de n-propyle, du propanoate de n-butyle, du propanoate de n-pentyle, de l'éthoxy-3-propanoate d'éthyle, de l'acétate de 1-méthoxy-2propyle, du 1-propoxy-2propanol, acétate de 1-propoxy-2-propyle, du 1-butoxy-2-propanol, du 1-(2-méthoxy-1-méthyléthoxy) 2-propanol, de l'acétate de 1-(2-méthoxy-1-méthyléthoxy) 2- propyle, du 1-(2-propoxy-1-méthyléthoxy) 2-propanol, et du [2-(2-méthoxy méthyléthoxy) méthyléthoxy] propanol. D'autres exemples sont possibles.

Par ailleurs, le liant thermoplastique est choisi en particulier en fonction du matériau servant de support d'impression pour la composition d'encre thermochromique. C'est un avantage de l'invention que de permettre résoudre les problèmes susmentionnés avec un grand nombre de supports d'impression pouvant être utilisés pour recevoir l'impression thermochromique. Ainsi la composition d'encre thermochromique peut être optimisée pour une impression sur un support choisi dans le groupe des matériaux thermoplastiques, des papiers synthétiques, et des papiers fiduciaires. Il est à noter à ce titre que la composition d'encre thermochromique peut être optimisée pour une impression sur un support sensible aux solvants tel que les supports en polycarbonate et les papiers fiduciaires.

Le liant thermoplastique de la composition d'encre thermochromique peut aussi être optimisé pour une impression sur un support destiné à être laminé à chaud et sous pression (par exemple un laminat de couches thermoplastiques formant une carte de sécurité et/ou d'identification telle qu'une carte bancaire).

Le liant thermoplastique de la composition d'encre thermochromique peut aussi être optimisé pour présenter une grande durée de vie, notamment de plusieurs années, par exemple d'au moins dix ans.

En particulier, à titre d'exemple, le liant thermoplastique de la composition d'encre thermochromique peut être optimisé pour une impression sur un support en un matériau thermoplastique choisi dans le groupe constitué du polycarbonate, du PVC, et des polyesters (polytéréphtalate d'éthylène PET, PETG). D'autres exemples sont possibles.

Avantageusement la composition d'encre thermochromique plus particulièrement destinée à une impression sur un support en polycarbonate comprend à titre de liant une résine thermoplastique choisie dans le groupe formé des poly(méth)acrylates d'alkyle et de leurs copolymères.

En particulier, à titre d'exemple, le liant thermoplastique de la composition d'encre thermochromique peut être optimisé pour une impression sur un support en papier synthétique choisi parmi le papier commercialisé sous la marque Teslin® par la société PPG, Monroeville, USA, le papier commercialisé sous la marque Neobond® par la société Neenah Lahnstein, Lahnstein, Allemagne, et le papier commercialisé sous la marque Polyart® par la société Arjobex, Boulogne, France. D'autres exemples sont possibles.

En particulier, à titre d'exemple, le liant thermoplastique de la composition d'encre thermochromique peut être optimisé pour une impression sur un support en papier fiduciaire, tel qu'un papier de passeports, un papier de billet de banque, un papier de carte d'identité, un papier de permis de conduire, un papier de visa, un papier de certificat de naissance, un papier de sceaux douaniers,... D'autres exemples sont possibles.

Dans les applications de sécurité et/ou d'identification de l'invention, le liant thermoplastique de la composition d'encre thermochromique peut également avantageusement être choisi de façon à révéler les tentatives de falsification aux solvants (attaque chimique), et en particulier un liant incorporant un agent soluble dans les solvants d'un adhésif (lorsque la composition d'encre thermochromique est utilisée pour imprimer un motif thermochromique sur une carte adhésive) comme décrit par exemple par EP 1109675.

Par ailleurs, un autre avantage de la composition d'encre thermochromique est de permettre l'adjonction de différents additifs dans le solvant sans perturber le durcissement de la composition après impression.

En particulier, avantageusement la composition d'encre thermochromique comprend en outre au moins un additif anti-UV choisi dans le groupe formé des agents absorbeurs d'ultra-violets et des agents stabilisateurs de lumière (notamment de type HALS (« hindered amine light stabilizers »). Un tel agent absorbeur d'ultraviolets et/ou stabilisateur de lumière de la composition d'encre thermochromique est incorporé au dit solvant aprotique, et est en particulier distinct des éventuels absorbeurs d'ultraviolets et/ou stabilisateurs de lumière incorporés aux microcapsules thermochromiques. Avantageusement la composition d'encre thermochromique comprend entre 1 % et 10 % -notamment entre 2 % et 5 %- en poids d'un additif anti-UV.

À titre d'additif anti-UV de la composition d'encre thermochromique, on peut utiliser tout absorbeur d'ultraviolets et/ou stabilisateur de lumière compatible avec les autres constituants de la composition. À titre d'exemple, on peut citer le groupe des 2-(hydroxyphényl)-benzotriazoles (cf. notamment "Ultraviolet stabilizers of the 2-(hydroxyphenyl)benzotriazole class: influence of substituents on structure and spectra" J. Phys. Chem., 1992, 96 (25), pp 10225-10234) ; le groupe des 2-hydroxyphényl-s-triazines (cf. notamment US5096489) ; et le groupe des 2,2,6,6-tétraméthylpipéridines (TMP) (cf. notamment « oxidation inhibition in organic materials » Jan Pospisil, Peter P. Klemchuk CRC Press, 1989). Avantageusement et selon l'invention, on peut choisir un absorbeur d'ultraviolets dans le groupe du 2-(2-hydroxyphényl)-benzotriazole (BTZ) et de la 2-hydroxyphényl-s-triazine (HDT).

Dans un mode de réalisation avantageux et conforme à l'invention, la composition d'encre thermochromique comprend dans ledit solvant entre 15 % et 35 % en poids de microcapsules thermochromiques, entre 30 % et 45 % en poids de liant thermoplastique, entre 1 % et 10 % en poids d'au moins un additif anti-UV.

Le motif thermochromique peut être quelconque : texte(s), dessin(s), ligne(s),... Il peut aussi s'agir d'un aplat (impression continue sur au moins une partie de surface d'une couche de la carte).

Avantageusement et selon l'invention au moins un motif thermochromique est imprimé avec la composition d'encre thermochromique de façon à être interposé entre une couche de surface de la carte et une couche immédiatement sous-jacente à ladite couche de surface. Pour ce faire, au moins un motif thermochromique est imprimé avec la composition d'encre thermochromique sur une couche de surface de la carte, c'est-à-dire sur une couche de matériau thermoplastique -notamment en polycarbonate- dont une face constitue une face libre de la carte après lamination à chaud et sous pression. Un tel motif thermochromique est avantageusement imprimé sur une face de ladite couche de surface opposée à la face de la couche constituant la face libre externe de la carte. En variante ou en combinaison, au moins un motif thermochromique est imprimé avec la composition d'encre thermochromique sur une couche immédiatement sous-jacente à une couche de surface de la carte, notamment sur une face de cette couche sous-jacente venant au contact de ladite couche de surface après lamination à chaud et sous pression.

L'invention concerne également un procédé de fabrication d'une carte et une carte caractérisés en combinaison par tout ou partie des caractéristiques mentionnées ci-dessus ou ci-après.

D'autres buts, caractéristiques et avantages de l'invention apparaîtront à la lecture des exemples qui suivent.

### EXEMPLE 1 : fabrication d'une composition d'encre thermochromique

Une composition d'encre thermochromique est fabriquée en dispersant 20% en poids de microcapsules thermochromiques dans un mélange liquide formé d'un solvant polaire aprotique et d'une résine thermoplastique.

La composition d'encre thermochromique comprend :
- 20 % en poids de pigments (microcapsules) thermochromiques,
- 40 % en poids de copolymère de méthacrylate de méthyle à titre de liant transparent,
- 26 % en poids de 1-(2-méthoxy-1-méthyléthoxy) 2-propanol,
- 10 % de éthoxy-3-propanoate d'éthyle,
- 4 % en poids de 2-hydroxyphényl-s-triazine (absorbeur d'ultraviolets).

Les microcapsules thermochromiques sont des_microcapsules commercialisées sous la marque CHAMELEON® par la société Polychrom Co LTD, Ansan City, Corée.

L'absorbeur d'ultraviolets est commercialisé sous la référence TINUVIN® 400 par la société BASF, Ludwigshafen, Allemagne.

Cette encre présente une viscosité de 7.0 Pa.s +/- 1 Pa.s

L'encre peut s'imprimer avec des écrans de sérigraphie de 120 fils/cm permettant des impressions fines type trame de 80 dpi.

### EXEMPLE 2 : fabrication d'une carte en polycarbonate incorporant des impressions thermochromiques

Une composition d'encre obtenue conformément à l'exemple 1 est imprimée sous forme d'un aplat sur l'une des faces de deux feuilles de polycarbonate transparent dont l'épaisseur est de l'ordre de 50 µm.

L'encre est séchée par air chaud.

Les feuilles de polycarbonate imprimées sont associées avec cinq autres feuilles de polycarbonate interposées entre les feuilles de polycarbonate imprimées de façon à former un empilement, les faces imprimées étant placées au contact des feuilles sous-jacentes de l'empilement, c'est-à-dire ne constituant pas les faces extérieures de ce dernier. Les cinq feuilles de polycarbonate formant, avec les deux feuilles imprimées, ledit empilement sont successivement les suivantes : une feuille de 100 µm de polycarbonate transparent ; une feuille de 200 µm de polycarbonate blanc ; une feuille de 200 µm de polycarbonate blanc ; une feuille de 200 µm de polycarbonate blanc ; une feuille de 100 µm de polycarbonate transparent.

L'ensemble des feuilles formant cet empilement est laminé dans une presse de lamination dans les conditions suivantes :
- 1 min de montée à 180°C
- 12 min à 180°C sous 30N/cm²
- 5 min à 180°C sous 150 N/cm²
- refroidissement à 26°C pendant 17,5 min sous 180N/cm².

On obtient une carte dont l'épaisseur totale est égale à la somme des épaisseurs des feuilles de polycarbonate utilisées diminuée d'environ 10 %.

Les impressions thermochromiques réalisées avec la composition d'encre thermochromique selon l'invention se trouvent ainsi incorporées dans l'épaisseur de la carte.

### EXEMPLE 3 : tests d'adhérence et de durabilité

Des tests de durabilité sont effectués sur des cartes en polycarbonate telles que fabriquées conformément à l'exemple 2.

L'adhérence entre les différentes couches constitutives de la carte est évaluée selon différents protocole de test :
- mesure de pelage selon la norme ISO 10373 - 90° à 300mm/min,
- mesure de pelage après vieillissement climatique selon les normes ISO 24789-1 et 2,
- test de flexion selon les normes ISO 24789-1 et 2, 50 000 flexions dans la longueur, 50 000 flexions dans la largeur,
- test de flexion après vieillissement climatique selon les normes ISO 24789-1 et 2,
- test de flexion après exposition à la lumière artificielle selon les normes ISO 24789-1 et 2

La mesure de pelage montre que la force d'adhérence entre les couches est supérieure à 3,5 N/cm.

Dans les tests de flexion, aucune délamination n'apparaît au niveau des couches de polycarbonate environnant les impressions thermochromiques.

### EXEMPLE 4 : résistance à la lumière

La résistance à la lumière des cartes en polycarbonate telles que fabriquées conformément à l'exemple 2 est évaluée en mesurant l'écart de couleurs (DE* Lab) des impressions thermochromiques avant et après exposition à la lumière artificielle. La mesure de la couleur s'effectue lorsque les impressions thermochromiques se trouvent dans leur premier état non activé c'est-à-dire dans la version colorée des microcapsules thermochromiques.

La mesure de l'écart de couleur s'effectue avec un spectro-colorimètre (Spectropen® (Dr. Lange, Düsseldorf, Germany)) selon la norme ISO 7724-3.

Les impressions thermochromiques sont exposées suivant trois protocoles de test :
- exposition aux UVA : 20h ; UVA 340 nm ; 60°C ; 0,72 W/m²/nm (norme ISO 4892),
- exposition à la lumière artificielle selon la norme OACI 3.2 -2006-paragraphe 5-14,
- exposition à la lumière arc xénon selon la norme ISO 24789-1 et 2.

L'écart de couleur DE est inférieur à 10 dans le cas d'une exposition aux UVA et inférieur à 5 dans le cas d'une exposition à la lumière artificielle de type arc xénon.

Avec des microcapsules thermochromiques réversibles colorées à l'état non activé et transparentes à l'état activé.

On constate que l'activité thermochromique des échantillons exposés en ce qui concerne la plage de température de décoloration et la plage de température recoloration est identique à celles des échantillons non exposés.

### EXEMPLE 5 : tenue climatique

La tenue climatique des cartes en polycarbonate telles que fabriquées conformément à l'exemple 2 est évaluée selon les protocoles de tests suivants :
- exposition à des cycles thermiques et à des conditions de stockage stressante selon la norme OACI 3.2-2006 paragraphe 5.2 ("thermal cycling method") et paragraphe 5.3 ("storage temperature stress method"),
- exposition à des températures et humidité élevées, choc thermique et cycle thermique selon la norme ISO 24789-1 et 2, paragraphe 5-7 ("temperature and humidity ageing"), paragraphe 5-8 ("temperature shock"), paragraphe 5-9 ("temperature and humidity cycling").

Pour les différents protocoles de test, il n'y a pas de perte de l'activité thermochromique, en termes de décoloration, de changement au niveau de la plage de décoloration et de la plage de recoloration.

## Revendications

1. Procédé de fabrication d'une carte en matériau thermoplastique -notamment en polycarbonate- comprenant au moins une étape de lamination à chaud et sous pression d'une pluralité de couches en matériau thermoplastique -notamment en polycarbonate-,
**caractérisé en ce que**, avant l'au moins une étape de lamination à chaud et sous pression, on imprime sur au moins une couche en matériau thermoplastique -notamment en polycarbonate-, au moins un motif thermochromique avec une composition d'encre thermochromique comprenant dans un milieu liquide, dit solvant, ledit solvant étant aprotique :
- une dispersion de microcapsules thermochromiques incorporant au moins un leuco-colorant, et
- un liant thermoplastique choisi dans le groupe formé des polyesters polyacryliques, des polyuréthanes, et de leurs copolymères.

2. Procédé selon la revendication 1, **caractérisé en ce que** l'au moins un motif thermochromique est imprimé de façon à être interposé entre une couche de surface de la carte et une couche immédiatement sous-jacente à ladite couche de surface.

3. Procédé selon l'une des revendications 1 ou 2, **caractérisé en ce que** ledit solvant comprend au moins un composé choisi dans le groupe formé des propanoates de n-alkyle -notamment du propanoate de n-propyle, du propanoate de n-butyle, du propanoate de n-pentyle et du 3-éthoxypropanoate d'éthyle -, des propylènes de glycol, de l'acétate de 1-méthoxy-2-propyle, du 1-propoxy-2-propanol, acétate de 1-propoxy-2-propyle, du 1-butoxy-2-propanol, du 1-(2-méthoxy-1-méthyléthoxy) 2-propanol, de l'acétate de 1-(2-méthoxy-1-méthyléthoxy) 2- propyle, du 1-(2-propoxy-1-méthyléthoxy) 2-propanol, et du [2-(2- méthoxy méthyléthoxy) méthyléthoxy] 2-propanol.

4. Procédé selon l'une des revendications 1 à 3, **caractérisé en ce que** ledit solvant est choisi dans le groupe des solvants aprotiques ayant un moment dipolaire compris entre 0 et 1,9 C.m.

5. Procédé selon l'une des revendications 1 à 4, **caractérisé en ce que** ledit solvant est choisi dans le groupe des solvants aprotiques ayant une constante diélectrique comprise entre 1,5 et 11.

6. Procédé selon l'une des revendications 1 à 5, **caractérisé en ce que** ledit solvant est choisi dans le groupe des solvants polaires aprotiques.

7. Procédé selon l'une des revendications 1 à 6, **caractérisé en ce que** ladite composition d'encre comprend des microcapsules thermochromiques en mélamine formaldéhyde.

8. Procédé selon l'une des revendications 1 à 7, **caractérisé en ce que** ladite composition d'encre comprend à titre de liant une résine thermoplastique choisie dans le groupe formé des poly(méth)acrylates d'alkyle et de leurs copolymères.

9. Procédé selon l'une des revendications 1 à 8, **caractérisé en ce que** ladite composition d'encre comprend en outre au moins un additif anti-UV choisi dans le groupe formé des agents absorbeurs d'ultra-violets et des agents stabilisateurs de lumière.

10. Procédé selon l'une des revendications 1 à 9, **caractérisé en ce que** ladite composition d'encre comprend entre 1 % et 10 % -notamment entre 2 % et 5 %- en poids d'un additif anti-UV.

11. Procédé selon l'une des revendications 1 à 10, **caractérisé en ce que** ladite composition d'encre comprend dans ledit solvant entre 5 % et 35 % en poids de microcapsules thermochromiques, entre 30 % et 45 % en poids de liant thermoplastique, entre 1 % et 10 % en poids d'au moins un additif anti-UV.

## Patentansprüche

1. Verfahren zur Herstellung einer Karte aus thermoplastischem Material - insbesondere aus Polycarbonat -, umfassend wenigstens einen Schritt des Laminierens, bei Hitze und unter Druck, einer Vielzahl von Schichten aus thermoplastischem Material - insbesondere aus Polycarbonat -,
**dadurch gekennzeichnet, dass** vor dem wenigstens einen Schritt des Laminierens bei Hitze und unter Druck auf wenigstens eine Schicht aus thermoplastischem Material - insbesondere aus Polycarbonat - wenigstens ein thermochromes Motiv mit einer thermochromen Tintenzusammensetzung aufgedruckt wird, die in einem flüssigen Medium, Lösungsmittel genannt, wobei das Lösungsmittel aprotisch ist, umfasst:
- eine Dispersion von thermochromen Mikrokapseln, die wenigstens einen Leukofarbstoff enthalten, und
- ein thermoplastisches Bindemittel, ausgewählt aus der Gruppe, die von Polyestern, Polyacrylen, Polyurethanen und ihren Copolymeren gebildet wird.

2. Verfahren nach Anspruch 1, **dadurch gekennzeichnet, dass** das wenigstens eine thermochrome Motiv so aufgedruckt wird, dass es zwischen einer Deckschicht der Karte und einer unmittelbar unter der Deckschicht liegenden Schicht zwischengefügt ist.

3. Verfahren nach einem der Ansprüche 1 oder 2, **dadurch gekennzeichnet, dass** das Lösungsmittel wenigstens eine Verbindung umfasst, ausgewählt aus der Gruppe, die von n-Alkylpropanoaten - insbesondere n-Propylpropanoat, n-Butylpropanoat, n-Pentylpropanoat und Ethyl-3-ethoxypropanoat -, Propylenglykolen, 1-Methoxy-2-propylacetat, 1-Propoxy-2-propanol, 1-Propoxy-2-propylacetat, 1-Butoxy-2-propanol, 1-(2-Methoxy-1-methylethoxy)-2-propanol, 1-(2-Methoxy-1-Methylethoxy)-2-propylacetat, 1-(2-Propoxy-1-methylethoxy)-2-propanol, und [2-(2-Methoxymethylethoxy)methylethoxy]-2-propanol gebildet wird.

4. Verfahren nach einem der Ansprüche 1 bis 3, **dadurch gekennzeichnet, dass** das Lösungsmittel aus der Gruppe der aprotischen Lösungsmittel ausgewählt ist, die ein Dipolmoment im Bereich zwischen 0 und 1,9 C.m. besitzen.

5. Verfahren nach einem der Ansprüche 1 bis 4, **dadurch gekennzeichnet, dass** das Lösungsmittel aus der Gruppe der aprotischen Lösungsmittel ausgewählt ist, die eine Dielektrizitätskonstante im Bereich zwischen 1,5 und 11 besitzen.

6. Verfahren nach einem der Ansprüche 1 bis 5, **dadurch gekennzeichnet, dass** das Lösungsmittel aus der Gruppe der polaren aprotischen Lösungsmittel ausgewählt ist.

7. Verfahren nach einem der Ansprüche 1 bis 6, **dadurch gekennzeichnet, dass** die Tintenzusammensetzung thermochrome Mikrokapseln aus Melaminformaldehyd umfasst.

8. Verfahren nach einem der Ansprüche 1 bis 7, **dadurch gekennzeichnet, dass** die Tintenzusammensetzung als Bindemittel ein thermoplastisches Harz umfasst, ausgewählt aus der Gruppe, die von Alkylpoly(meth)acrylaten und ihren Copolymeren gebildet wird.

9. Verfahren nach einem der Ansprüche 1 bis 8, **dadurch gekennzeichnet, dass** die Tintenzusammensetzung weiter wenigstens ein Anti-UV-Additiv umfasst, ausgewählt aus der Gruppe, die von ultraviolette Strahlung absorbierenden Mitteln und lichtstabilisierenden Mitteln gebildet wird.

10. Verfahren nach einem der Ansprüche 1 bis 9, **dadurch gekennzeichnet, dass** die Tintenzusammensetzung zwischen 1 Gew.-% und 10 Gew.-% - insbesondere zwischen 2 Gew.-% und 5 Gew.-% - Anti-UV-Additiv umfasst.

11. Verfahren nach einem der Ansprüche 1 bis 10, **dadurch gekennzeichnet**, das die Tintenzusammensetzung in dem Lösungsmittel zwischen 5 Gew.-% und 35 Gew.-% thermochrome Mikrokapseln, zwischen 30 Gew.-% und 45 Gew.-% thermoplastisches Bindemittel, zwischen 1 Gew.-% und 10 Gew.-% von wenigstens einem Anti-UV-Additiv umfasst.

## Claims

1. Method for manufacturing a card made of thermoplastic material - in particular made of polycarbonate - comprising at least one step of hot lamination and under pressure of a plurality of layers made of thermoplastic material - in particular made of polycarbonate -,
**characterised in that**, before the at least one step of hot lamination and under pressure, on at least one layer made of thermoplastic material - in particular made of polycarbonate -, is printed at least one thermochromic pattern with a thermochromic ink composition comprising in a liquid medium, referred to as a solvent, said solvent being aprotic:
- a dispersion of thermochromic microcapsules incorporating at least one leuco dye, and
- a thermoplastic binder chosen from the group comprising polyacrylic polyesters, polyurethanes, and copolymers thereof.

2. Method according to claim 1, **characterised in that** the at least one thermochromic pattern is printed in such a way as to be inserted between a surface layer of the card and a layer immediately underlying to said surface layer.

3. Method according to one of claims 1 or 2, **characterised in that** said solvent comprises at least one compound chosen from the group comprising n-alkyl propanoates - in particular n-propyl propanoate, n-butyl propanoate, n-pentyl propanoate and ethyl 3-ethoxypropanoate -, glycol propylenes, 1-methoxy-2-propyl acetate, 1-propoxy-2-propanol, 1-propoxy-2-propyl acetate, 1-butoxy-2-propanol, 1-(2-methoxy-1-methylethoxy) 2-propanol, 1-(2-methoxy-1-methylethoxy) 2-propyl acetate, 1-(2-propoxy-1-methylethoxy) 2-propanol, and [2-(2-methoxy methylethoxy) methylethoxy] 2-propanol.

4. Method according to one of claims 1 to 3, **characterised in that** said solvent is chosen from the group of aprotic solvents that have a dipole moment between 0 and 1.9 C.m.

5. Method according to one of claims 1 to 4, **characterised in that** said solvent is chosen from the group of aprotic solvents that have a dielectric constant between 1.5 and 11.

6. Method according to one of claims 1 to 5, **characterised in that** said solvent is chosen from the group of polar aprotic solvents.

7. Method according to one of claims 1 to 6, **characterised in that** said ink composition comprises thermochromic melamine-formaldehyde microcapsules.

8. Method according to one of claims 1 to 7, **characterised in that** said ink composition comprises as a binder a thermoplastic resin chosen from the group formed of alkyl poly(meth)acrylates and copolymers thereof.

9. Method according to one of claims 1 to 8, **characterised in that** said ink composition further comprises at least one anti-UV additive chosen from the group formed of ultra-violet absorbing agents and light-stabilising agents.

10. Method according to one of claims 1 to 9, **characterised in that** said ink composition comprises between 1% and 10% - in particular between 2% and 5% - by weight of an anti-UV additive.

11. Method according to one of claims 1 to 10, **characterised in that** said ink composition comprises in said solvent between 5% and 35% by weight of thermochromic microcapsules, between 30% and 45% by weight of thermoplastic binder, between 1% and 10% by weight of at least one anti-UV additive.
